# EUROPEAN PATENT APPLICATION

(11) **EP 4 560 649 A1**
(43) Date of publication of application: **28.05.2025**
(21) Application number: 23212205.1
(22) Date of filing: 27.11.2023
(51) Int. Cl.: G21K 1/00, G06N 10/00

(54) **DEVICES AND METHODS FOR PERIODICALLY COOLING TRAPPED IONS**

(71) Applicant: Infineon Technologies Austria AG, 9500 Villach (AT)
(72) Inventor: HARTMANN, Michael, 80803 München (DE); BRANDL, Matthias, 85614 Kirchseeon (DE)
(74) Representative: Lambsdorff & Lange Patentanwälte Partnerschaft mbB

(57) **Abstract**

A micro-fabricated device (100) for controlling trapped ions includes a storage unit (10) for storing and cooling the trapped ions. The storage unit includes a first cooling zone (2A), wherein the first cooling zone is configured to cool ions located in the first cooling zone based on a laser cooling technique. The storage unit further includes a first closed shuttling path (4A) extending through the first cooling zone, wherein the first closed shuttling path is configured to shuttle the trapped ions to periodically pass through the first cooling zone.

## Description

### Technical Field

The present disclosure relates to devices for controlling trapped ions and storage units for storing and cooling the trapped ions. In addition, the present disclosure relates to corresponding methods for storing and cooling the trapped ions.

### Background

Quantum computers can be used for solving important problems more efficiently than classical computers in various fields, such as e.g. materials science, cryptography or logistics. Due to long decoherence times and good gate fidelities, trapped ions represent one of the most promising candidates for realizing quantum computers when being used as qubits. In such quantum computers, ions need to be cooled to or close to their ground state in order to achieve both long decoherence times and high gate fidelities.

Manufacturers and developers of devices for controlling trapped ions are constantly striving to improve their products. In particular, it may be desirable to provide cooling solutions that simplify optical integration and facilitate scaling of ion traps to larger sizes. In addition, it may be desirable to develop cooling solutions that reduce ion trap manufacturing costs without compromising the quality of ion cooling.

### Summary

An aspect of the present disclosure relates to a micro-fabricated device for controlling trapped ions. The device comprises a storage unit for storing and cooling the trapped ions. The storage unit comprises a first cooling zone, wherein the first cooling zone is configured to cool ions located in the first cooling zone based on a laser cooling technique. The storage unit further comprises a first closed shuttling path extending through the first cooling zone, wherein the first closed shuttling path is configured to shuttle the trapped ions to periodically pass through the first cooling zone.

A further aspect of the present disclosure relates to a method for storing and cooling trapped ions in a device for controlling trapped ions. The method comprises an act of shuttling the trapped ions along a closed shuttling path extending through a cooling zone. The cooling zone is configured to cool ions located in the cooling zone based on a laser cooling technique. The shuttling path is selected to shuttle the trapped ions to periodically pass through the cooling zone.

### Brief Description of the Drawings

Devices and methods in accordance with the disclosure are described in more detail below based on the drawings. Similar reference numerals may designate corresponding similar parts. The technical features of the various illustrated examples may be combined unless they exclude each other and/or can be selectively omitted if not described to be necessarily required.
Figure 1 schematically illustrates a device 100 for controlling trapped ions including a storage unit for storing and cooling the trapped ions.
Figure 2 schematically illustrates a device 200 for controlling trapped ions including a storage unit for storing and cooling the trapped ions.
Figure 3 schematically illustrates a device 300 for controlling trapped ions including multiple storage units for storing and cooling the trapped ions.
Figure 4 schematically illustrates a device 400 for controlling trapped ions including multiple storage units for storing and cooling the trapped ions.
Figure 5 schematically illustrates a device 500 for controlling trapped ions including a processing zone and multiple storage units for storing and cooling the trapped ions.
Figure 6 schematically illustrates a device 600 for controlling and cooling trapped ions.
Figure 7 schematically illustrates a device 700 for controlling and cooling trapped ions.
Figure 8 illustrates a flowchart of a method for storing and cooling trapped ions in a device for controlling trapped ions in accordance with the disclosure.

### Detailed Description

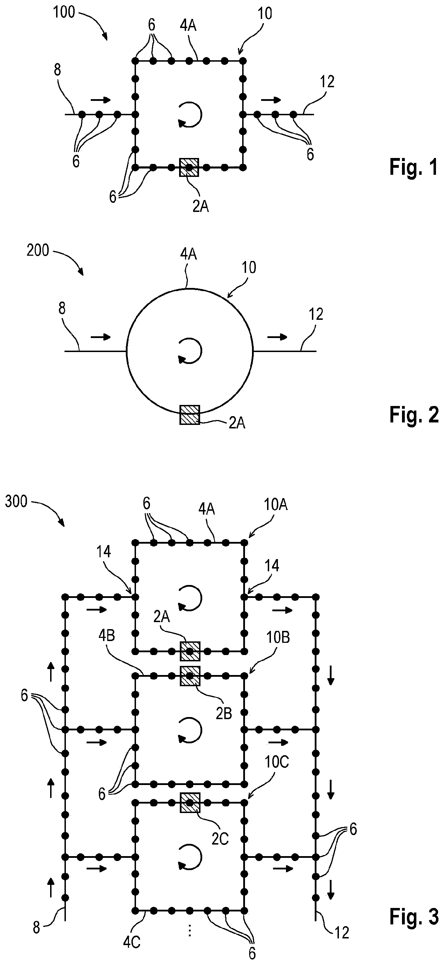

The micro-fabricated device 100 for controlling trapped ions of Figure 1 is illustrated in a general manner in order to qualitatively specify aspects of the present disclosure. The device 100 may be extended by any of the aspects discussed in connection with other examples described herein. For example, Figures 3 to 5 illustrate more detailed devices in accordance with the disclosure.

The device 100 may include a storage unit 10 configured to store and cool trapped ions. The storage unit 10 may include a cooling zone 2A configured to cool ions located in the cooling zone 2A based on a laser cooling technique. In addition, the storage unit 10 may include a closed shuttling path (or closed shuttling trace) 4A extending through the cooling zone 2A. The closed shuttling path 4A is configured to shuttle the trapped ions to periodically pass through the cooling zone 2A.

Trapped ions may be shuttled (or transported) along various shuttling paths of the device 100, such as e.g. the closed shuttling path 4A. For example, a shuttling path may extend above a structured electrode layer including multiple electrodes of the ion trap. In particular, a shuttling path may be arranged in a plane over such structured electrode layer. Time-dependent electric fields may be used for shuttling laser-cooled ions along the shuttling paths. A shuttling of the ions may be controlled by electric voltages applied to the electrodes of the structured electrode layer. In particular, the ions may be moved along shuttling paths by means of AC and DC voltages that may be separately coupled to specific electrodes of the structured electrode layer. The structured electrode layer may e.g. include RF electrodes for RF trapping and DC electrodes for static electric-field trapping and/or for moving the ions within the ion trap. Ion traps as described herein may be configured to trap a plurality of ions that may be individually addressable and movable by appropriately controlling the electric potentials of the electrodes of the ion traps.

In a specific example, the ion trap of the device 100 may correspond to a surface ion trap (or surface-electrode ion trap). In surface ion traps all electrodes (i.e. the DC electrodes and the RF electrodes) may be arranged in a same single plane. The ions may be stored and shuttled above this single plane. However, it is to be noted that the concepts described herein are not restricted to surface ion traps. In further examples, devices for controlling trapped ions in accordance with the disclosure may also be based on three-dimensional ion trap geometries.

The trapped ions may be physically grouped in ion chains (or ion strings or ion crystals). An ion chain may include one or multiple ions, wherein each of the ions may represent a physical qubit. In addition, an ion chain may include one or multiple ions of other species (i.e. ions of different atoms or isotopes) that may be used for sympathetic cooling. In the following, the terms "ion" and "ion chain" may be used interchangeably at times. In the exemplary illustration of Figure 1, small dots indicate exemplary positions 6 of ion chains moving along the closed shuttling path 4A. It is to be noted that the number and the arrangement of the ion positions 6 in Figure 1 is exemplary and in no way limiting.

In the illustrated example, the closed shuttling path 4A may include an exemplary and non-limiting number of twenty-four ion positions 6. That is, a maximum of twenty-four ion chains may be stored in the storage unit 10. Furthermore, the ion positions 6 may be equidistantly arranged in the illustrated case. In further examples, distances between the ions positions 6 may be chosen differently as long as an undesired interaction between neighboring ion chains is omitted. Note that not all of the ions positions 6 need to be actually occupied by ion chains. That is, one or multiple ion positions 6 may remain free from any ion chains.

A laser cooling technique using laser light may be applied at the cooling zone 2A for cooling ions located therein. For example, the laser cooling technique may include Doppler cooling, side band cooling, or a combination thereof. In particular, the cooling zone 2A may be configured to cool the trapped ions to or close to their ground state in order to achieve long decoherence times of the ions and high gate fidelities when performing quantum gate operations. One or multiple laser beams may precisely hit the trapped ions for cooling them.

In a first exemplary cooling concept, a single (laser) cooling beam may be used for cooling ions located in the cooling zone 2A. In a second exemplary cooling concept, a cooling beam formed by two superimposed laser beams having different frequencies may be employed. For the sake of simplicity, laser sources for generating required cooling beams are not illustrated in the example of Figure 1. It is to be noted that the present disclosure is not necessarily restricted to a sole usage of laser cooling techniques. In further examples, cooling techniques may use both laser light and microwave radiation for cooling the trapped ions.

In the illustrated example, the cooling zone 2A may be the only cooling zone arranged along the closed shuttling path 4A. Although an arrangement of a single cooling zone 2A along the closed shuttling path 4A may be preferred, in further examples, one or multiple additional cooling zones may be installed along the closed shuttling path 4A. In particular, the cooling zone 2A may be arranged at a fixed position on the closed shuttling path 4A. A direction of a cooling beam generating the cooling zone 2A may be substantially fixed during an operation of the device 100.

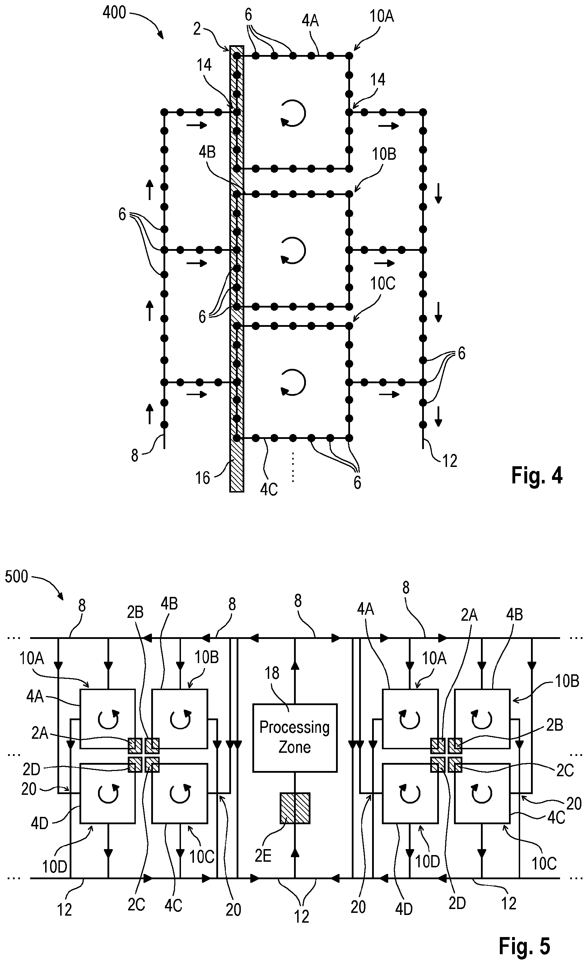

In the illustrated example, a direction or an installation of an employed cooling beam may be chosen such that a single ion position 6 may be covered by the cooling beam. That is, the exemplary cooling zone 2A of Figure 1 may be configured to cool one ion chain at a time. In further examples, a plurality of ion positions 6 may be covered by the cooling beam as e.g. shown and discussed in connection with Figure 4.

The device 100 may include at least one load path 8 configured to load ions into the closed shuttling path 4A. In addition, the load path 8 may be configured to shuttle ions from another component of the device 100 to the storage unit 10. In one example, the load path 8 may be a shuttling path extending between a processing zone of the device 100 and the storage unit 10. The device 100 may further include at least one unload path 12 configured to unload ions from the closed shuttling path 4A. In addition, the unload path 12 may be configured to shuttle ions from the storage unit 10 to another component of the device 100. For example, the unload path 12 may be a shuttling path extending between the storage unit 10 and a processing zone of the device 100. In a further example, the path 8 may be used for both loading ions into the closed shuttling path 4A and unloading ions from the closed shuttling path 4A. In such case, the unload path 12 may be omitted or considered optional.

During an operation of the device 100 ion chains may be shuttled to the storage unit 10 via the load path 8. The ion chains may be loaded into the closed shuttling path 4A and may then be cyclically shuttled in the storage unit 10, as indicated by a circular arrow. In the illustrated case, the circular arrow exemplarily indicates an ion shuttling in a clockwise direction. In a further example, the ions may be shuttled counterclockwise. In yet another example, a shuttling direction of the ions may change once or multiple times between a clockwise motion and a counterclockwise motion. When performing a cyclic shuttling, the ion chains may periodically pass through the cooling zone 2A and may thus be cooled on a regular basis. If an ion chain cyclically moving along the shuttling path 4A is required at another component of the device 100, such as e.g. at a processing zone, the ion chain may be unloaded from the closed shuttling path 4A and may be shuttled to this component via the unload path 12.

According to the above the storage unit 10 may provide two functionalities. First, ion chains may be stored in the storage unit 10 until they may be required by another component (e.g. a processing zone) of the device 100 which is not shown here for the sake of simplicity. In this regard, the storage unit 10 may be referred to as memory unit or quantum memory. Second, when cyclically moving along the shuttling path 4A, the ion chains may be cooled effectively such that the motional states of the ion chains remain close to the motional ground states and that the ion chains can be used for later quantum information processing. In this regard, the storage unit 10 may be referred to as cooling unit.

In the illustrated example, the closed shuttling path 4A is shown to have the form of a square. It is however to be noted that the displayed square shape of the closed shuttling path 4A is exemplary and in no way limiting. In general, a shape of the closed shuttling path 4A may be chosen arbitrarily as long as the ion chains may periodically pass through the cooling zone 2A. A variety of possible shapes is conceivable in this regard. Note that other exemplary forms are shown and described in connection with Figures 2, 6 and 7.

In one example, the closed shuttling path 4A may be configured to shuttle the trapped ions in a stop-and-go fashion. During such movement ion chains stored in the closed shuttling path 4A may be shuttled from an ion position 6 to an adjacent ion position 6 and may at times remain at their respective positions for a desired time interval. However, in a more preferred example, the closed shuttling path 4A may be configured to shuttle the trapped ions in a continuous fashion. In such case, the ion chains may be in constant motion such that as many ions as possible can be transported through the cooling zone 2A in a short time. The ion chains may be shuttled at a constant velocity or at varying velocities. In particular, the ion chains may move at a constant velocity when being shuttled along a path free of intersections, for example a straight path. At intersections, such as e.g. X-junctions or T-junctions, RF-field strengths may have lower values such that the shuttling velocities of the ion chains may be reduced.

The described cooling and storing concept of the device 100 may outperform cooling concepts of conventional ion trap devices in various ways. Due to the described cyclic cooling of ion chains in the same cooling zone for multiple times the number of cooling zones of the device 100 may be reduced. A problem of scaling an optical integration required for ion cooling may thus be avoided or at least mitigated. In addition, reducing the number of cooling zones may reduce stray light occurring during an operation of the device 100. Furthermore, since an implementation of cooling zones may be hard to fabricate, because of the light and/or RF required at the cooling zone, the overall system may be much easier to fabricate than having cooling capabilities at each site.

The micro-fabricated device 200 for controlling trapped ions of Figure 2 may include some or all features of the device 100 of Figure 1. The storage unit 10 of Figure 2 is configured to provide a cyclic cooling of ion chains as previously described in connection with Figure 1. In Figure 2, no specific ion positions 6 are shown in order to indicate that a shuttling of ion chains along the closed shuttling path 4A may be performed in a continuous fashion. In the illustrated example, the closed shuttling path 4A may have a circular shape. In further examples, the shape of the shuttling path 4A may be chosen differently as previously discussed in connection with Figure 1.

The micro-fabricated device 300 for controlling trapped ions of Figure 3 may include some or all features of previously described devices. In Figure 3, multiple storage units 10A to 10C may be combined to form a bigger storage unit (or storage zone). For example, the storage units 10A to 10C of Figure 3 may be similar to the storage units 10 of Figures 1 and 2. In this context, the storage units 10 of Figures 1 and 2 may regarded as basic storage units. The storage units 10A to 10C may include cooling zones 2A to 2C and closed shuttling paths 4A to 4C extending through the cooling zones 2A to 2C. In the illustrated case, the storage zone of the device 300 may include an exemplary number of three storage units 10A to 10C. In further examples, only two storage units or more than three storage units may be combined to form the entire storage zone. It is to be noted that the example of Figure 3 may provide a simple and straightforward opportunity for scaling to larger storage zones. Larger storage zones may be obtained by simply adding further basic storage units to the storage zone.

In the illustrated example, the closed shuttling paths 4A to 4C may be connected in parallel between a load path 8 and an unload path 12. During an operation of the device 300 ion chains may be shuttled to each of the storage units 10A to 10C via the load path 8. The ion chains may be loaded into a respective one of the closed shuttling paths 4A to 4C and may be cyclically shuttled therein for being periodically cooled. If an ion chain cyclically moving along one of the closed shuttling paths is required at another component (e.g. a processing zone) of the device 300, the ion chain may be unloaded from the closed shuttling path and may be shuttled to this component via the unload path 12. It is to be noted that the layout of the device 300 may be regarded as simple in that it only requires an implementation of T-junctions, i.e. junctions connecting three shuttling paths. In the illustrated example, each of the storage units 10A to 10C may be connected to the load path 8 and the unload path 12 at a T-junction 14, respectively.

In the illustrated example, the first cooling zone 2A and the second cooling zone 2B may be arranged adjacent to each other. In other words, the cooling zones 2A and 2B may be arranged in close proximity and physically next to each other. In further examples, a larger number of cooling zones may be grouped together in this manner. Due to their close proximity the cooling zones 2A and 2B may share light from a same laser light source. For example, light of a laser source may be directed towards the proximate cooling zones 2A and 2B first. In the vicinity of the cooling zones 2A and 2B the laser light may then be split in multiple laser beams for each of the cooling zones 2A and 2B. Grouping the cooling zones as described may simplify an optical integration of the device 300.

The micro-fabricated device 400 for controlling trapped ions of Figure 4 may include some or all features of previously described devices. Similar to the example of Figure 1 exemplary positions 6 of the ion chains are indicated by small dots. It is to be noted that, in practice, the ion chains may be shuttled in a continuous fashion, as e.g. described in connection with the example of Figure 2.

The device 400 may include a cooling zone 2 with a cooling beam 16 configured to cool multiple ion chains at a time. For example, the cooling beam 16 may be formed by two superimposed laser beams having different frequencies. In the illustrated example, the closed shuttling paths 4A to 4C of the device 400 may be arranged in such a way that the cooling beam 16 may cover portions of each of the shuttling paths 4A to 4C. The cooling beam 16 may cover multiple ion chains located in a single closed shuttling path. Alternatively, the cooling beam 16 may cover multiple ion chains located in different closed shuttling paths as shown in the example of Figure 4.

The micro-fabricated device 500 for controlling trapped ions of Figure 5 may include some or all features of previously described devices. The device 500 may include one or multiple processing zones 18 configured to receive trapped ions from storage units of the device 500 and to perform quantum gate operations on the received ions. In the illustrated example, only one processing zone 18 is shown for the sake of simplicity. The processing zone 18 may include or may correspond to e.g. a gate zone of a trapped ion quantum computer.

The device 500 may include a first storage zone (or memory zone) arranged to the left of the processing zone 18. In addition, the device 500 may include a second storage zone arranged to the right of the processing zone 18 which may be similar to the first storage zone. In the following, only the first storage zone is described for the sake of simplicity. In the illustrated example, the first storage zone may include four storage units 10A to 10D that may be similar to the basic storage units 10 of Figures 1 and 2. The storage units 10A to 10D may include cooling zones 2A to 2D and closed shuttling paths 4A to 4D extending through the cooling zones 2A to 2D. The cooling zones 2A to 2D may be arranged adjacent to each other in order to simplify an optical integration of the device 500 as previously discussed in connection with Figure 3. The device 500 may include one or multiple additional cooling zones. In the illustrated example, a further cooling zone 2E may be arranged at a position such that ion chains may be cooled in the cooling zone 2E just before entering the processing zone 18.

The first storage zone on the left and the processing zone 18 may be interconnected by a plurality of shuttling paths as illustrated in Figure 5. Exemplary shuttling directions for ion chains moving along the shuttling paths are indicated by arrows. In this regard, the device 500 may include various load paths 8 for shuttling ions to and for loading ions into the storage units 10A to 10D. In addition, the device 500 may include various unload paths 12 for unloading ions from the storage units 10A to 10D and for shuttling the ions to the processing zone 18. Compared to the examples of Figure 3 and 4, the layout of Figure 5 may be regarded as more advanced in that it may include X-junctions, i.e. junctions connecting four shuttling paths. In the illustrated example, the device 500 may include one X-junction 20 per two of the storage units 10A to 10D.

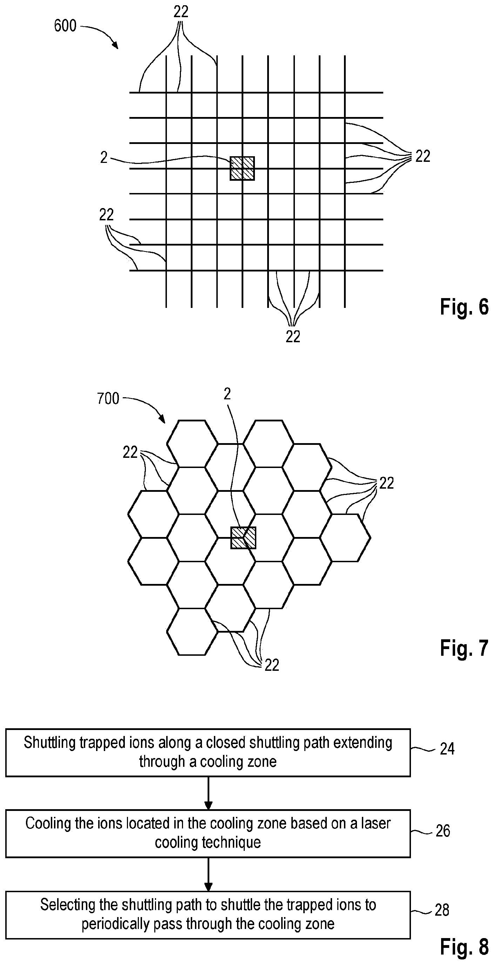

The micro-fabricated device 600 for controlling and cooling trapped ions of Figure 6 may include some or all features of previously described devices. The device 600 may include a plurality of shuttling paths 22 that may form a rectangular grid. The device 600 may include a cooling zone 2 that may e.g. be arranged at an X-junction of the rectangular grid of shuttling paths 22. The device 600 may include at least one closed shuttling path which is part of the rectangular grid of shuttling paths 22 and may extend through the cooling zone 2. In the illustrated example, no specific such shuttling path is illustrated. However, it is to be understood that multiple of such closed shuttling paths may be conceived for providing a cyclic cooling of ions shuttled along these closed shuttling paths.

The previously described examples of Figures 3 to 5 may be limited in that it may be difficult in these layouts to avoid having the shuttled ion chains block each other in some scenarios. Such blocking may result in an increase of latency and processing time, as the ion chains may have to pause until other ion chains get out of their way. Such problems may be avoided or at least mitigated by more flexible layouts having a larger number of junctions between shuttling paths. A larger number of junctions may allow shuttled ion chains to bypass blockage by other ions using a different shuttling path. Compared to previous examples, the dense rectangular grid of Figure 6 may provide flexible shuttling with an increased number of shuttling paths and junctions such that ion chain blocking may be omitted.

The micro-fabricated device 700 for controlling and cooling trapped ions of Figure 7 may include some or all features of previously described devices. The device 700 may include a plurality of shuttling paths 22 that may form a honeycomb grid. The device 700 may include a cooling zone 2 that may e.g. be arranged at a T-junction of the honeycomb grid of shuttling paths 22. The device 700 may include at least one closed shuttling path which is part of the honeycomb grid of shuttling paths 22 and may extend through the cooling zone 2. Similar to the example of Figure 6, the layout of Figure 7 may provide a flexible shuttling and effective cooling of ion chains.

Figure 8 illustrates a flowchart of a method for storing and cooling trapped ions in a device for controlling trapped ions in accordance with the disclosure. The method may be performed by any of the previously described devices and may thus be read in connection with preceding figures. The method of Figure 8 is described in a general manner in order to qualitatively specify aspects of the disclosure. It is understood that the method may be extended by any of the aspects described in connection with other examples in accordance with the disclosure.

In an act 24, trapped ions may be shuttled along a closed shuttling path extending through a cooling zone. The cooling zone may be configured to cool ions located in the cooling zone based on a laser cooling technique in an act 26. The shuttling path may be selected to shuttle the trapped ions to periodically pass through the cooling zone in an act 28.

Micro-fabricated devices for controlling trapped ions as discussed herein may be used for quantum computing. For example, the previously described storage units may be arranged in a memory zone of a quantum computer. Trapped ions are one of the most promising candidates for being used as qubits in quantum computers, since they can be trapped with long lifetimes in a scalable array by means of electromagnetic fields. In this regard, it is to be noted that the described devices may include various further components which may have not been illustrated and described in detail for the sake of simplicity. For example, the described devices may further include at least one of a gate zone, a state readout zone, a loading zone, a laser source, a microwave source, DC electrodes, RF electrodes, means for controlling voltages applied to these electrodes, X-junctions, T-junctions, etc.

Components of the described devices may be at least partially manufactured based on a micro-fabrication technique. For example, structured electrode layers of the devices may be formed based on a micro-fabrication technique. Micro-fabrication techniques (e.g. for electrode formation and structuring) may include one or more of photolithography processes (such as e.g. photoresist application, patterning, etching), deposition processes (such as e.g. CVD, PVD, sputtering), plating processes (such as e.g. electroless plating, galvanic plating), etching processes, or the like. Electrodes formed in the structured electrode layer may be structured with micrometer or sub-micrometer scale precision and alignment accuracy, thereby allowing complex electrode layouts without loss of controllability of trapped ions.

### Examples

In the following, devices for controlling trapped ions and methods for storing and cooling trapped ions in such devices are described by means of examples.
Example 1 is a micro-fabricated device for controlling trapped ions, the device comprising: a storage unit for storing and cooling the trapped ions, the storage unit comprising: a first cooling zone, wherein the first cooling zone is configured to cool ions located in the first cooling zone based on a laser cooling technique, and a first closed shuttling path extending through the first cooling zone, wherein the first closed shuttling path is configured to shuttle the trapped ions to periodically pass through the first cooling zone.
Example 2 is a device according to Example 1, wherein the first cooling zone is the only cooling zone along the first closed shuttling path.
Example 3 is a device according to Example 1 or 2, wherein the first cooling zone is arranged at a fixed position on the first closed shuttling path.
Example 4 is a device according to any of the preceding Examples, wherein the first cooling zone is configured to cool one ion chain at a time.
Example 5 is a device according to one of Examples 1 to 3, wherein the first cooling zone comprises a cooling beam configured to cool multiple ion chains at a time.
Example 6 is a device according to any of the preceding Examples, wherein the first closed shuttling path is part of a rectangular grid of shuttling paths or part of a honeycomb grid of shuttling paths.
Example 7 is a device according to any of the preceding Examples, wherein the first closed shuttling path is configured to shuttle the trapped ions in a stop-and-go fashion.
Example 8 is a device according to any of Examples 1 to 7, wherein the first closed shuttling path is configured to continuously shuttle the trapped ions.
Example 9 is a device according to any of the preceding Examples, further comprising: a processing zone configured to receive trapped ions from the storage unit and to perform quantum gate operations on the received ions.
Example 10 is a device according to any of the preceding Examples, wherein the storage unit further comprises: a second cooling zone, wherein the second cooling zone is configured to cool ions located in the second cooling zone based on a laser cooling technique, and a second closed shuttling path extending through the second cooling zone, wherein the second closed shuttling path is configured to shuttle the trapped ions to periodically pass through the second cooling zone.
Example 11 is a device according to Example 10, wherein the first cooling zone and the second cooling zone are arranged adjacent to each other and share light from a same laser light source.
Example 12 is a device according to Example 10 or 11, further comprising: a load path configured to load ions into the first closed shuttling path and the second closed shuttling path, and an unload path configured to unload ions from the first closed shuttling path and the second closed shuttling path, wherein the first closed shuttling path and the second closed shuttling path are connected in parallel between the load path and the unload path.
Example 13 is a device according to any of Examples 10 to 12, wherein: the first cooling zone and the second cooling zone comprise a cooling beam, and the first closed shuttling path and the second closed shuttling path are arranged such that the cooling beam at least partially covers both closed shuttling paths.
Example 14 is a method for storing and cooling trapped ions in a device for controlling trapped ions, the method comprising: shuttling the trapped ions along a closed shuttling path extending through a cooling zone, wherein the cooling zone is configured to cool ions located in the cooling zone based on a laser cooling technique, and wherein the closed shuttling path is selected to shuttle the trapped ions to periodically pass through the cooling zone.

The features of the various examples described herein may be combined with each other unless specifically noted otherwise. Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

## Claims

1. A micro-fabricated device for controlling trapped ions, the device comprising:
a storage unit (10) for storing and cooling the trapped ions, the storage unit (10) comprising:
a first cooling zone (2A), wherein the first cooling zone (2A) is configured to cool ions located in the first cooling zone (2A) based on a laser cooling technique, and
a first closed shuttling path (4A) extending through the first cooling zone (2A), wherein the first closed shuttling path (4A) is configured to shuttle the trapped ions to periodically pass through the first cooling zone (2A).

2. The device of claim 1, wherein the first cooling zone (2A) is the only cooling zone along the first closed shuttling path (4A).

3. The device of claim 1 or 2, wherein the first cooling zone (2A) is arranged at a fixed position on the first closed shuttling path (4A).

4. The device of any of the preceding claims, wherein the first cooling zone (2A) is configured to cool one ion chain at a time.

5. The device of one of claims 1 to 3, wherein the first cooling zone (2A) comprises a cooling beam configured to cool multiple ion chains at a time.

6. The device of any of the preceding claims, wherein the first closed shuttling path (4A) is part of a rectangular grid of shuttling paths (22) or part of a honeycomb grid of shuttling paths (22).

7. The device of any of the preceding claims, wherein the first closed shuttling path (4A) is configured to shuttle the trapped ions in a stop-and-go fashion.

8. The device of any of claims 1 to 7, wherein the first closed shuttling path (4A) is configured to continuously shuttle the trapped ions.

9. The device of any of the preceding claims, further comprising:
a processing zone (18) configured to receive trapped ions from the storage unit (10) and to perform quantum gate operations on the received ions.

10. The device of any of the preceding claims, wherein the storage unit (10) further comprises:
a second cooling zone (2B), wherein the second cooling zone (2B) is configured to cool ions located in the second cooling zone (2B) based on a laser cooling technique, and
a second closed shuttling path (4B) extending through the second cooling zone (2B), wherein the second closed shuttling path (4B) is configured to shuttle the trapped ions to periodically pass through the second cooling zone (2B).

11. The device of claim 10, wherein the first cooling zone (2A) and the second cooling zone (2B) are arranged adjacent to each other and share light from a same laser light source.

12. The device of claim 10 or 11, further comprising:
a load path (8) configured to load ions into the first closed shuttling path (4A) and the second closed shuttling path (4B), and
an unload path (12) configured to unload ions from the first closed shuttling path (4A) and the second closed shuttling path (4B),
wherein the first closed shuttling path (4A) and the second closed shuttling path (4B) are connected in parallel between the load path (8) and the unload path (12).

13. The device of any of claims 10 to 12, wherein:
the first cooling zone (2A) and the second cooling zone (2B) comprise a cooling beam (16), and
the first closed shuttling path (4A) and the second closed shuttling path (4B) are arranged such that the cooling beam (16) at least partially covers both closed shuttling paths.

14. A method for storing and cooling trapped ions in a device for controlling trapped ions, the method comprising:
shuttling the trapped ions along a closed shuttling path (4A) extending through a cooling zone (2A),
wherein the cooling zone (2A) is configured to cool ions located in the cooling zone (2A) based on a laser cooling technique, and
wherein the closed shuttling path (4A) is selected to shuttle the trapped ions to periodically pass through the cooling zone (2A).
